(19) Europäisches Patentamt

European Patent Office

Office européen des brevets

(11) EP 0 677 492 B1

# (12) EUROPEAN PATENT SPECIFICATION

(45) Date of publication and mention
of the grant of the patent:
**01.09.1999 Bulletin 1999/35**

(51) Int. Cl.$^6$: **C03C 3/087**, C03C 4/02,
C03C 4/08

(21) Application number: **95300962.8**

(22) Date of filing: **15.02.1995**

(54) **Heat absorbing glass composition**

Wärmeabsorbierende Glaszusammensetzung

Composition de verre absorbant de la chaleur

(84) Designated Contracting States:
**DE FR GB**

(30) Priority: **10.03.1994 US 208329**

(43) Date of publication of application:
**18.10.1995 Bulletin 1995/42**

(73) Proprietor: **Ford Motor Company**
**Dearborn, MI 48126 (US)**

(72) Inventor: **Jones, James Victor**
**Toledo, Ohio 43623 (US)**

(74) Representative:
**Messulam, Alec Moses et al**
**A. Messulam & Co.**
**24 Broadway**
**Leigh-on-Sea Essex SS9 1BN (GB)**

(56) References cited:
EP-A- 0 536 049          WO-A-91/11402
BE-A- 662 472            FR-A- 2 074 983
FR-A- 2 082 459          GB-A- 1 168 769
GB-A- 1 331 492          US-A- 2 938 808
US-A- 4 190 452          US-A- 5 278 108

## Description

This invention is directed to a neutral grey-green coloured glass composition which has good solar management properties (ultra violet and infra red light filtering) while also having a high visible transmittance, i.e., preferably a minimum of about 70% (69.5%) luminous transmittance using illuminant A (LTA) at a control thickness of 4 mm. More particularly, it comprises soda-lime-silica glass whose colouring oxides consist essentially of specified amounts of iron oxide, cobalt, and one or more of the following: selenium, manganese dioxide or nickel oxide.

The majority of glass used in automotive vehicles, e.g., for the windshield, sidelight and backlite is green in colour because this colour coordinates well with a wide range of vehicle paint colours. It is desirable to have other glasses available which have a neutral grey-green colour, yet in addition maintain a low infra red transmittance and low total solar energy while exhibiting a relatively high transmittance (preferably >70% LTA) in visible portion of the spectrum. This latter property is desirable because glass used in trucks in front of the B-pillar and all glass used in automobiles is presently required to meet the U.S. Federal minimum LTA of 70%. It would further be desirable if the neutral grey-green glass was also compatible with flat glass manufacturing methods.

Those skilled in the art know that adding or substituting one colourant for another and/or changing the amount or relative proportion of colourants in a glass composition affects not only the colour of the glass, i.e., dominant wavelength and excitation purity, but also can effect light transmission (solar management properties) of the glass and its structural qualities. For example, simply increasing the iron oxide content in soda-lime-silica glass compositions to improve the infra red (heat) and ultra violet absorption generates a glass product with an intensified green colour, which correlates with an increase in the excitation purity. Such glass would be less than desirable for automotive use because of it intensified green colour.

By providing a glass composition with specified amounts of total iron oxide and of cobalt and at least one of the following: selenium, manganese dioxide, or nickel oxide, while at the same time providing a particular amount of the total iron oxide in the reduced $Fe^{+2}$ form (FeO), a neutral grey-green glass product with good solar management characteristics.

U.S. Patent 3,300,323 to Plumat, et. al. discloses a soda-lime-silica glass, grey in colour, having colouring components: 0.05 to 0.5 weight % $Fe_2O_3$, 2.0 to 6.0 weight % $TiO_2$, 0.005 to 0.010 weight % CoO, and optionally manganese dioxide. The Plumat, et. al. glass has a much higher excitation purity than glass of this invention, however, and employs high amounts of costly $TiO_2$ to provide solar management properties.

U.S. Patent 3,723,142 to Kato, et. al. discloses a soda-lime-silica glass which is grey in colour and has a low excitation purity. The colouring components consist essentially of 0.1 to 0.5 weight % iron oxide, 0.003 to 0.02 weight % CoO (equivalent to 0.00235 to 0.0157 Co) and 0.0005 to 0.001 weight % selenium with negligible amounts of nickel oxide. The unpredictability of this art area is shown in that my invention glass even when employing substantially higher amounts of total iron oxide than the Kato, et. al. examples, unexpectedly provides higher LTA.

U.S. Patent Re 25312 to Duncan, et. al., uses total iron oxide within the range of this invention in a soda-lime-silica glass composition, but higher concentrations of cobalt oxide, selenium, and nickel oxide than used in the present invention. U.S. Patent 4,873,206 to Jones discloses grey glass compositions which include iron oxide within the range of this invention, but selenium, and cobalt in much higher concentrations than glass of this invention. Also, in European Patent 0 482 535 to Longobardo, et. al., much higher concentrations of iron oxide, selenium, and cobalt are employed in glass products. All such compositions do not provide the LTA of the present invention.

U.S. Patent 5,112,778 to Cheng, et. al., discloses a green glass having a total iron oxide of 0.70 to 1.25 weight % as $Fe_2O_3$ while requiring 0.2 to 1.4 weight % of costly $CeO_2$ to provide desired solar management properties.

The present invention is a glass composition that is heat absorbing, grey to green in colour and possesses less than 1.8% excitation purity using illuminant C (LTC) at 4 mm. control thickness. The composition in its broadest embodiment comprises 68 to 75% $SiO_2$, 10 to 18% $Na_2O$, 5 to 15% CaO, 0 to 10% MgO, 0 to 5% $Al_2O_3$, and 0 to 5% $K_2O$, where CaO + MgO is 6 to 15% and $Na_2O$ + $K_2O$ is 10 to 20%, and colourants consisting essentially of: 0.45 to 0.95 wt.% total iron oxide as $Fe_2O_3$; 0.09 to 0.185 wt.% FeO, preferably, 0.16 wt.% FeO; 0.0008 to 0.003 wt.% cobalt as Co; together with one or more of the following: up to 0.001 wt.% selenium as Se, up to 0.5 wt.% manganese oxide as $MnO_2$, and up to 0.003 wt.% nickel oxide as NiO. Either one or more of selenium, manganese dioxide, or nickel oxide must be present in glass products of this invention. All weight percents disclosed herein for composition components are based on the total weight of the invention glass composition.

Glass products made according to the broadest embodiments of the invention have the following spectral properties at 4 mm. control thickness: less than 1.8% excitation purity using illuminant C; at least 60% light transmittance using illuminant A (LTA), preferably being greater than 69.5% LTA which correlates with a preferred maximum 0.16 wt.% FeO in the glass composition; 30 to 55% ultra violet transmittance; and 33 to 55% infra red transmittance. This glass has a dominant wavelength between about 480 and 575.5 nanometres using illuminant C. Generally, as the quantities of the colourants increase, the % transmittance will go down. Similarly, as the glass thickness increases for a given composition, the transmittance of the thicker glass will decrease. While glass made according to the float glass process, which is the preferred process for making the present invention glass composition, is typically between 2.0 to 12.0 millimetres, the glass produced according to this invention is not meant to be so limited.

Glass of this invention, in addition to being useful for automotive glazings, is ideal for architectural uses where the solar management properties, high visible transmission, and neutral grey-green colour are desirable.

Flat soda-lime-silica glass, used in the automotive and architectural industries and conventionally made by the float process, is generally characterised by the following basic composition: 68 to 75% $SiO_2$, 10 to 18% $Na_2O$, 5 to 15% CaO, 0 to 10% MgO, 0 to 5% $Al_2O_3$, and 0 to 5% $K_2O$, the amounts of the components being used based on a weight percentage of the total glass composition.

The neutral grey-green glass composition of the present invention employs this basic soda-lime-silica glass composition wherein further in the present invention composition CaO + MgO is 6 to 15% and $Na_2O + K_2O$ is 10 to 20%. The basic glass compositions often contains an amount of iron oxide as an impurity depending on the trace amounts in the batch materials. In addition, the neutral grey-green glass composition consists essentially of the following colouring components: iron oxide and cobalt oxide; and at least one of selenium, manganese dioxide, or nickel oxide. Suitable batch materials for making the present invention glass, which are compounded by conventional glass forming techniques, include such raw materials as sand, soda ash, dolomite, limestone, salt cake, sodium nitrate, rouge, cobalt oxide, and at least one of selenium metal, manganese oxide, and nickel oxide. Preferably, $SO_3$ in the resultant invention glass composition is 0.10 to 0.30 wt.%, more preferably being 0.14 to 0.25 wt.%.

The desire and difficulty of this invention is to make glass products that have less than 1.8% excitation purity while simultaneously having a dominant wavelength between 480 and 575.5 nanometres, i. e., being grey to green in colour, as well as the required ultra violet and infra red transmission properties. As mentioned above, the importance of the present invention glass having a grey-green colour is that the majority of other automotive and truck glasses, used for example as the windshield, are a shade of green because this colour coordinated well with a variety of vehicle paint colours. As the excitation purity of the glass is lowered, the perceived colour of the glass moves toward a neutral grey-green permitting the glass to be used equally well with any vehicle paint colour.

The glass composition of this invention includes as one of the colouring components 0.45 to 0.95 wt.% total iron oxide as $Fe_2O_3$, preferably being at least 0.50 wt.%, more preferably being about 0.6 to 0.9 wt.% $Fe_2O_3$. When the glass batch materials are melted, some of the initial total iron oxide as $Fe_2O_3$ is reduced to FeO. I have found that by shifting the reduced form of iron oxide, FeO, which has an intense blue colour in the glass toward the oxidised form of iron oxide, $Fe_2O_3$, which has a pale yellow colour, the resultant colour of the glass is a less intense green. Accordingly, the invention requires that the reduced iron oxide form (FeO) in the glass product be shifted so that the glass composition contains only about from 0.09 to 0.185 wt.% FeO in the glass product, preferably being a maximum of 0.016 wt.% when it is desired to maintain at least about 70% LTA in the glass product. There are several methods known to those skilled in the art capable of providing a more oxidising environment in the glass composition including (1) shifting the furnace firing condition to more oxidising flames or (2) changing the batch chemistry by adding oxidisers such as sodium nitrate or lowering the amount of reducing agents, such as carbon in the batch.

Since the oxidised form of iron oxide incorporated in the composition lowers the ultra violet transmittance of the glass products, there is an added benefit that manufactured glass products, with the iron oxide shifted to the oxidised form as discussed above, has increased ultra violet absorption properties. This desirably reduces exposure of the dyes in fabrics and such inside a room or vehicle to ultra violet light, since these dyes are sometimes susceptible to colour changes by ultra violet light. Advantageously, the improvement in ultra violet absorption by the glass product is achieved without using additional costly batch components such as titanium dioxide and cerium oxide. Glass of this invention also maintains good infra red (heat) absorption properties. When the glass product is used in automobiles, heat is absorbed by the glass so that the load on air conditioners is initially reduced and there is less total heat in the vehicle to cool.

As discussed above, it is essential to obtain the spectral properties of the invention glass composition that only a critical proportion of the total iron oxide as $Fe_2O_3$ be reduced to FeO in the glass product, i.e., the product must contain only from 0.09 to 0.185 wt.% FeO, preferably the FeO is 0.11 to 0.16 wt.%. In addition, I have determined that to obtain the required excitation purity for my glass composition, the glass must contain, in addition to the iron oxide as described above, 0.0008 to 0.003 wt.% cobalt oxide as Co and one or more of the following colourants: 0 to 0.001 wt.% selenium as Se, 0 to 0.5 wt.% manganese dioxide as $MnO_2$, and 0 to 0.003 wt.% nickel oxide as NiO. Since selenium, cobalt, manganese dioxide, and nickel oxide all absorb light in the visible portion of the spectrum, it is all the more remarkable that glass of this invention can meet the relatively high LTA transmittance, being in the preferred embodiment composition, greater than about 70% LTA.

Cobalt as Co is present as a colouring component in the glass composition in an amount of 0.0008 to 0.003 wt.%, preferably in the range of 0.0008 to 0.0024 wt.%. The cobalt is generally included in the batch materials in the form of cobalt oxide ($Co_3O_4$). Selenium (Se) can be present as a colouring component in an amount of 0 to 0.001 wt.%, preferably being present in the range of 0.0002 to 0.0006 wt.%. It is necessary to carefully balance the amount of selenium, when present, with that of cobalt oxide to achieve a neutral grey appearance to the final product.

Manganese dioxide can be included in glass of this invention in the amount of 0 to 0.5% based on $MnO_2$, preferably being present in the glass composition in about 0 to 0.3 wt.%. In the glass composition, manganese oxide is generally present in the $Mn^{+2}$ and $Mn^{+3}$ states. There are two functions that manganese dioxide performs in the present invention composition when present: (1) one form of manganese in the glass absorbs in the same area as selenium so that it can replace a portion of the selenium, and (2) manganese dioxide acts as an oxidiser and helps to retain a larger proportion of selenium in the glass product. Typically, in compositions without manganese dioxide, a large amount of selenium (about 85-90%) which is very costly volatilises from the batch even when using sodium or potassium nitrates as oxidisers.

Further nickel oxide can be included in glass of this invention in the amount of about 0 to 0.003 wt.% as NiO, preferably being 0 to 0.001 wt.%. Nickel oxide is often not used in glass compositions because it can react with sulphur present in the glass to undesirably form nickel sulphide stones therein. The small wt.% of nickel allowably used in this invention is considered sufficiently small enough to advantageously avoid any significant formation of nickel sulphide stones.

Examples of compositions of glasses made according to the present invention, as well as their spectral properties, are found in Table I below:

Table I

|  | Example 1 | Example 2 | Example 3 | Example 4 | Example 5 |
|---|---|---|---|---|---|
| % LTA | 75.4 | 73.8 | 70.5 | 70.0 | 69.8 |
| Dominant Wawelength | 503.2 | 506.0 | 510.7 | 513.8 | 499.5 |
| Excitation Purity % | 1.5 | 1.4 | 1.5 | 1.6 | 1.5 |
| % UV | 47.8 | 42.7 | 37.9 | 36.1 | 44.2 |
| % IR | 45.9 | 47.8 | 43.2 | 40.0 | 48.3 |
| % TSET | 57.0 | 57.4 | 53.2 | 51.0 | 56.4 |
| wt.% Se | 0.0004 | 0.0002 | 0.0003 | 0.0003 | 0.0005 |
| wt.% Co | 0.0012 | 0.0012 | 0.0014 | 0.0012 | 0.0024 |
| wt.% $Fe_2O_3$ | 0.658 | 0.592 | 0.805 | 0.891 | 0.629 |
| wt.% Feo | 0.122 | 0.113 | 0.131 | 0.145 | 0.111 |

Example 5 demonstrates that when Co approaches the high end of the allowable range within this invention, the %LTA falls below the present minimum U.S. Federal 70% LTA required of automotive glazings such as the windshield. If the Federal minimum of 70% LTA were to be lowered, however, in the future then such a composition could include increased amounts of Co and at least one of selenium, manganese dioxide or nickel oxide within the scope of this invention.

As used throughout the disclosure of this invention and in Table I above, % LTA is defined to be the % luminous transmittance measured under CIE standard illuminant A. Preferably the LTA is greater than 69.5%, more preferably being a maximum of about 76.5% Most preferably, the LTA is 71 to 73%. As used herein, the % UV is the % ultra violet transmittance as measured between 280 and 400 nanometres, while the % IR is the % infra red transmittance measured over the range of 720 to 2120 nanometres. The % TSET is the total solar energy transmittance as defined in U. S. Patent 4,792,536 by the equation:

$$\% \ TSET = 0.44 \ \%LTA + 0.53 \ \%IR + 0.03 \ \%UV$$

The dominant wavelength and % excitation purity are measured using CIE standard illuminant C. The concentrations of the colourants are those analysed in the final glass product.

Still other glass compositions made within the scope of this invention include those detailed in Tables II and III below. Table II shows examples of invention composition glasses with varying % excitation purity and Table III shows invention composition glasses with lower LTAs than those of Table II, i.e., the LTAs being between 60 and 70%.

EP 0 677 492 B1

Table II

|  | Example 6 | Example 7 | Example 8 | Example 9 |
|---|---|---|---|---|
| % LTA | 70.1 | 71.7 | 70.9 | 75.3 |
| Dominant Wavelength | 518.4 | 525.7 | 511.6 | 509.6 |
| Excitation Purity % | 1.3 | 1.0 | 0.9 | 0.7 |
| % UV | 42.1 | 44.6 | 44.5 | 52.6 |
| % IR | 41.1 | 50.5 | 50.3 | 54.2 |
| % TSET | 51.8 | 58.3 | 58.0 | 62.2 |
| wt.% Se | 0.0006 | 0.0004 | 0.0004 | 0.0006 |
| wt.% Co | 0.0015 | 0.0016 | 0.0021 | 0.0018 |
| wt.% $Fe_2O_3$ | 0.600 | 0.595 | 0.473 | 0.503 |
| wt.% FeO | 0.140 | 0.103 | 0.104 | 0.092 |
| wt/% $MnO_2$ | 0.20 | 0.0 | 0.0 | 0.0 |

Table III

|  | Example 10 | Example 11 | Example 12 | Example 13 |
|---|---|---|---|---|
| % LTA | 67.1 | 67.1 | 68.0 | 65.9 |
| Dominant Wavelength | 528.0 | 503.4 | 508.6 | 500.8 |
| Excitation Purity % | 1.4 | 1.5 | 1.3 | 1.6 |
| % UV | 37.4 | 38.3 | 38.3 | 43.7 |
| % IR | 43.2 | 43.6 | 44.0 | 36.9 |
| % TSET | 52.0 | 52.4 | 52.8 | 48.1 |
| wt.% Se | 0.0005 | 0.0004 | 0.0004 | 0.0005 |
| wt.% Co | 0.0017 | 0.0021 | 0.0020 | 0.0019 |
| wt.% $Fe_2O_3$ | 0.740 | 0.765 | 0.747 | 0.671 |
| wt.% FeO | 0.139 | 0.129 | 0.128 | 0.162 |

Table IV below lists the components of the glass compositions of the present invention, in their broadest and in their preferred wt.% ranges, and the broadest and preferred spectral properties of glass composition according to the invention.

Table IV

|  | Broadest Range | Preferred Range |
|---|---|---|
| % LTA | $\geq 60$ | 71.0 to 73.0 |
| % UV | 30.0 to 55.0 | 33.0 to 45.0 |
| % IR | 33.0 to 55.0 | 38.0 to 45.0 |
| % TSET | 48.0 to 65.0 | 48.0 to 57.0 |
| Dominant Wavelength | 480 to 575.5 | 488 to 530 |

Table IV (continued)

|  | Broadest Range | Preferred Range |
|---|---|---|
| Excitation Purity, % | < 1.8 | < 1.3 |
| wt.% Se | 0 to 0.001 | 0.0002 to 0.0006 |
| wt.% Co | 0.0008 to 0.003 | 0.0008 to 0.0024 |
| wt.% $Fe_2O_3$ | 0.45 to 0.95 | 0.6 to 0.9 |
| wt.% FeO | 0.09 to 0.185 | 0.11 to 0.16 |
| wt.% $MnO_2$ | 0 to 0.5 | 0 to 0.3 |
| wt.% NiO | 0 to 0.003 | 0 to 0.001 |

## Claims

1. A heat absorbing, grey to green coloured glass composition comprising a base glass composition: 68 to 75% $SiO_2$, 10 to 18% $Na_2O$, 5 to 15% CaO, 0 to 10% MgO, 0 to 5% $Al_2O_3$, and 0 to 5% $K_2O$, where CaO + MgO is 6 to 15% and $Na_2O + K_2O$ is 10 to 20%, and colourants consisting essentially of: 0.45 to 0.95 wt.% total iron oxide as $Fe_2O_3$; 0.09 to 0.185 wt.% FeO; 0.0008 to 0.003 wt.% cobalt as Co; and at least one colouring component selected from the group consisting of: up to 0.001 wt.% selenium as Se; up to 0.5 wt.% manganese oxide as $MnO_2$; and up to 0.003 wt.% nickel oxide as NiO; the glass at 4mm. control thickness having spectral properties comprising: less than 1.8% excitation purity using illuminant C, at least 60% light transmittance using illuminant A (LTA), 30 to 55% ultra violet transmittance, 33 to 55% infra red transmittance, and a dominant wavelength between about 480 and 575.5 nanometres using illuminant C.

2. A glass composition according to claim 1, wherein said dominant wavelength is 488 to 530 nanometres.

3. A glass composition according to claim 1 comprising up to 0.016 wt.% FeO.

4. A glass composition according to claim 3 comprising 0.6 to 0.9 wt.% $Fe_2O_3$, 0.11 to 0.16 wt.% FeO, and 0.0008 to 0.0024 wt.% Co.

5. A glass composition according to claim 4 comprising 0.0002 to 0.0006 wt.% Se, 0 to 0.3 wt.% $MnO_2$, and 0 to 0.001 wt.% NiO.

6. A glass composition according to claim 1, wherein said LTA is greater than 69.5%.

7. A glass composition according to claim 1, wherein said LTA is between about 69.5 % and 76.5%.

8. A glazing for automotive or architectural use prepared from the glass composition of any one of claims 1 to 7

## Patentansprüche

1. Eine Wärme absorbierende, grau bis grün gefärbte Glaszusammensetzung, die eine Basis-Glaszusammensetzung umfaßt: 68 bis 75 % $SiO_2$, 10 bis 18 % $Na_2O$, 5 bis 15 % CaO, 0 bis 10 % MgO, 0 bis 5 % $Al_2O_3$, und 0 bis 5 % $K_2O$; wobei CaO + MgO 6 bis 15 % und $Na_2O + K_2O$ 10 bis 20 % betragen, und die Farbstoffe im wesentlichen bestehen aus: 0.45 bis 0.95 Gewichtsprozent Gesamteisenoxid als $Fe_2O_3$; 0.09 bis 0.185 Gewichtsprozent FeO; 0.0008 bis 0.003 Gewichtsprozent Kobalt als Co; und mindestens einem färbenden Bestandteil aus der Gruppe die besteht aus: bis zu 0.001 Gewichtsprozent Seien als Se; bis zu 0.5 Gewichtsprozent Manganoxid als $MnO_2$; und bis zu 0.003 Gewichtsprozent Nickeloxid als NiO; wobei das Glas bei einer Prüfdicke von 4 mm spektrale Eigenschaften hat, die in sich einschließen: weniger als 1.8 % spektraler Farbanteil unter Verwendung von Leuchtkörper C, mindestens 60 % Lichtdurchlaßgrad bei Verwendung von Leuchtkörper A (LTA), 30 bis 55 % Lichtdurchlaßgrad im Ultravioletten, 33 bis 55 % Lichtdurchlaßgrad im Infraroten, und eine maßgebende Wellenlänge zwischen etwa 480 und 575.5 Nanometern bei Verwendung von Leuchtkörper C.

2. Eine Glaszusammensetzung nach Anspruch 1, worin diese maßgebende Wellenlänge 488 bis 530 Nanometer beträgt.

**3.** Eine Glaszusammensetzung nach Anspruch 1, die bis zu 0.016 Gewichtsprozent FeO umfaßt.

**4.** Eine Glaszusammensetzung nach Anspruch 3, die 0.6 bis 0.9 Gewichtsprozent $Fe_2O_3$, 0.11 bis 0.16 Gewichtsprozent FeO und 0.0008 bis 0.0024 Gewichtsprozent Co umfaßt.

**5.** Eine Glaszusammensetzung nach Anspruch 4, die 0.0002 bis 0.0006 Gewichtsprozent Se, 0 bis 0.3 Gewichtsprozent $MnO_2$, und 0 bis 0.001 Gewichtsprozent NiO umfaßt.

**6.** Eine Glaszusammensetzung nach Anspruch 1, worin diese LTA größer als 69.5 % ist.

**7.** Eine Glaszusammensetzung nach Anspruch 1, worin diese LTA zwischen etwa 69.5 % und 76.5 % liegt.

**8.** Eine Verglasung für automobile und architektonische Verwendung die aus der Glaszusammensetzung eines der Ansprüche 1 bis 7 hergestellt wird.

## Revendications

**1.** Composition de verre de couleur grise à verdâtre, absorbant la chaleur comprenant une composition de verre de base formée à raison de 68 à 75% de $SiO_2$, de 10 à 18% de $Na_2O$, de 5 à 15% de CaO, de 0 à 10% de MgO, de 0 à 5% d'$Al_2O_3$, et de 0 à 5% de $K_2O$, où CaO + MgO représente de 6 à 15% et $Na_2O + K_2O$ représente de 10 à 20%, et des colorants essentiellement constitués : à raison de 0,45 à 0,95% en poids d'oxyde de fer total en termes de $Fe_2O_3$; de 0,09 à 0,185% en poids de FeO; de 0,0008 à 0,003% en poids de cobalt en termes de Co; et d'au moins un composant colorant choisi dans le groupe constitué de : sélénium jusqu'à 0,001% en poids sous forme de Se; d'oxyde de manganèse jusqu'à 0,5% en poids sous forme de $MnO_2$, et d'oxyde de nickel jusqu'à 0,003% en poids sous forme de NiO; ce verre ayant pour une épaisseur test de 4 mm des propriétés spectrales comprenant : moins de 1,8% de facteur de pureté d'excitation en utilisant un éclairage C, au moins 60% de transmission lumineuse en utilisant un éclairage A (LTA), 30 à 55% de transmission dans l'ultraviolet, 33 à 55% de transmission dans l'infrarouge, et une longueur d'onde dominante comprise entre 480 et 575,5 nm en utilisant un éclairage C.

**2.** Composition de verre selon la revendication 1, dans laquelle ladite longueur d'onde dominante est de 488 à 530 nm.

**3.** Composition de verre selon la revendication 1, comprenant jusqu'à 0,016% en poids de FeO.

**4.** Composition de verre selon la revendication 3, comprenant de 0,6 à 0,9% en poids de $Fe_2O_3$, de 0,11 à 0,16% en poids de FeO, et de 0,0008 à 0,0024% en poids de Co.

**5.** Composition de verre selon la revendication 4, comprenant de 0,0002 à 0,0006% en poids de Se, de 0 à 0,3% en poids de $MnO_2$, et de 0 à 0,001% en poids de NiO.

**6.** Composition de verre selon la revendication 1, dans laquelle ledit facteur LTA est supérieur à 69,5%.

**7.** Composition de verre selon la revendication 1, dans laquelle ledit facteur LTA est compris entre environ 69,5% et 76,5%.

**8.** Vitrage utilisé en automobile ou en construction, préparé à partir de la composition de verre selon l'une quelconque des revendications 1 à 7.